# EUROPÄISCHE PATENTSCHRIFT

(11) **EP 2 591 654 B1**
(45) Veröffentlichungstag und Bekanntmachung des Hinweises auf die Patenterteilung: **07.01.2015**
(21) Anmeldenummer: 12188263.3
(22) Anmeldetag: 12.10.2012
(51) Int. Cl.: A01D 41/127, A01B 79/00

(54) **Anordnung und Verfahren zur automatischen Dokumentation von Situationen bei der Feldarbeit**
Assembly and method for automatic documentation of situations in agricultural work
Agencement et procédé destinés à la documentation automatique de situations lors d'un travail agricole

(30) Priorität: 09.11.2011 DE 102011086021
(43) Veröffentlichungstag der Anmeldung: 15.05.2013
(73) Patentinhaber: DEERE & COMPANY, Moline, Illinois 61265-8098 (US)
(72) Erfinder: Kormann, Dr., Georg, 66482 Zweibrücken (DE)
(74) Vertreter: Holst, Sönke

(56) Entgegenhaltungen:
- EP-A2- 1 659 366
- AU-A4- 2010 101 429
- DE-A1- 4 329 343

## Beschreibung

Die Erfindung betrifft eine Anordnung zur automatischen Dokumentation von Situationen bei der Feldarbeit, umfassend:
wenigstens einen Betriebsparametersensor zur Erfassung eines Betriebsparameters einer landwirtschaftlichen Maschine bei der Feldarbeit und/oder wenigstens einen Erntegutsensor zur Erfassung einer Eigenschaft von der landwirtschaftlichen Maschine bei der Feldarbeit aufgenommenen und/oder bearbeiteten Ernteguts, und
eine mit dem Betriebsparametersensor und/oder dem Erntegutsensor versehene Rechnereinheit, die programmiert ist, bei Eintritt einer vorbestimmten Bedingung der empfangenen Signale des Betriebsparametersensors und/oder Erntegutsensors ein Auslösesignal zu erzeugen sowie ein entsprechendes Verfahren.

### Stand der Technik

In vielen Fällen werden derzeit, u.a. auf Grund des Kostendrucks, bei der landwirtschaftlichen Feldarbeit eingesetzte Maschinen durch eher weniger gut ausgebildete und eingewiesene Hilfskräfte bedient. Der Fachmann (z.B. Landwirt oder Betriebsleiter) befindet sich nur selten auf dem Feld, um die Umgebungsbedingungen und die Ausführung der Feldarbeit zu überwachen oder zu prüfen. Unter diesen Umständen ist es dem Fachmann im Nachhinein in vielen Fällen nicht möglich herauszufinden, warum unerwünschte oder unvorhergesehene Ereignisse eingetreten sind, wie beispielsweise eine Ernte eines Feldes mit sehr geringen Erträgen. Derartige Ereignisse können unterschiedliche Gründe haben, wie fehlende oder unzureichende ausgebrachte Saatgutmengen, zu geringe oder übermäßige Wasserversorgung, Wildverbiss, falsche Verwendung von Agrochemikalien oder schlechter Boden.

Im Stand der Technik sind Anordnungen bekannt, die es dem Bediener einer Erntemaschine ermöglichen, so genannte Marker zu setzen. Auf Knopfdruck hin wird in einer Karte eine Markierung georeferenziert abgespeichert, die zusätzlich mit gesprochenen Kommentaren versehen werden kann, um beispielsweise gehäufte Unkrautvorkommen, Insektenbefall, mangelnden Wasserabfluss etc. zu dokumentieren und später gezielt bekämpfen zu können (EP 1 659 366 A2). Diese Anordnungen erfordern ein hinreichendes Fachwissen des Bedieners, um die Situation zunächst überhaupt erkennen und dann auch noch richtig bewerten zu können, und eignen sich demnach nicht für die Verwendung durch weniger gut ausgebildete Hilfskräfte. Außerdem wurde vorgeschlagen, Bilddaten einer Kamera mit zugehörigen Positionsdaten für ein ganzes Feld aufzuzeichnen, um anhand der Bilder später Unkraut identifizieren und ggf. beseitigen zu können (DE 43 29 343 A1). Hier werden enorme Datenmengen erzeugt, die einerseits nur maschinell ausgewertet werden können und von denen andererseits im Regelfall die wenigsten Daten tatsächlich benötigt werden.

Schließlich beschreibt die als gattungsbildend angesehene DE 102 04 076 A1 eine selbstfahrende Erntemaschine mit Mitteln zur Überwachung der Erntegutbearbeitung und einer Übertragungsstrecke, über die Erntegutbearbeitungsfehler an eine beabstandete Station übersandt werden, welche wiederum einen Computer des Eigentümers der Erntemaschine über diese Fehler informiert und es letzterem ermöglicht, Einstellungen der Erntemaschine zu verändern. Auf diesem Wege können zwar ungünstige Einstellungen der Erntemaschine verbessert werden, jedoch ist es dem Eigentümer der Erntemaschine nicht möglich, Details über Feld und das dort vorhandene Erntegut zu gewinnen.

### Aufgabe

Es wäre wünschenswert, dem Fachmann (Landwirt, Betriebsleiter etc.) auf eine effiziente Weise Daten bereitzustellen, mit denen er Situationen bei der Feldarbeit analysieren und ggf. die Ursachen beheben kann.

Die der Erfindung zu Grunde liegende Aufgabe wird somit darin gesehen, eine verbesserte Anordnung und Verfahren zur automatischen Dokumentation von Situationen bei der Feldarbeit bereitzustellen, die bzw. das die Nachteile des diskutierten Standes der Technik nicht oder nur in vermindertem Umfang aufweist.

### Lösung

Diese Aufgabe wird erfindungsgemäß durch die Lehre der Patentansprüche 1, 14 und 15 gelöst, wobei in den weiteren Patentansprüchen Merkmale aufgeführt sind, die die Lösung in vorteilhafter Weise weiterentwickeln.

Eine Anordnung zur automatischen Dokumentation von Situationen bei der Feldarbeit umfasst wenigstens einen Betriebsparametersensor zur Erfassung eines Betriebsparameters einer landwirtschaftlichen Maschine bei der Feldarbeit und/oder wenigstens einen Erntegutsensor zur Erfassung einer Eigenschaft von der landwirtschaftlichen Maschine bei der Feldarbeit aufgenommenen und/oder bearbeiteten Ernteguts. Außerdem ist eine Rechnereinheit mit dem Betriebsparametersensor und/oder dem Erntegutsensor verbunden und programmiert, bei Eintritt einer vorbestimmten Bedingung der empfangenen Signale des Betriebsparametersensors und/oder Erntegutsensors ein Auslösesignal zu erzeugen. Die Rechnereinheit ist außerdem mit einer Bildaufnahmeeinrichtung zur Erzeugung eines Bildsignals von der landwirtschaftlichen Maschine und/oder ihrer Umgebung verbunden und speichert die besagten Bildsignale in Reaktion auf ein Auslösesignal georeferenziert ab und/oder übersendet sie über eine Übertragungsstrecke an eine beabstandete Stelle.

Auf diese Weise wird durch die Rechnereinheit selbsttätig eine für eine spätere Auswertung interessante Situation bei der Feldarbeit erkannt, indem die Signale des Betriebsparametersensors und/oder Erntegutsensors mit einer vorbestimmten Bedingung verglichen werden. Genau dann, wenn ein derartiges Auslösesignal erzeugt wird, wird ein Bildsignal von der Bildaufnahmeeinrichtung, die die landwirtschaftliche Maschine und/oder ihre Umgebung optisch überwacht, zwecks späterer Auswertung der Situation und ihrer Ursache sowie der ggf. zu befolgenden Maßnahmen abgespeichert. Alternativ oder zusätzlich wird das Bildsignal über die Übertragungsstrecke an eine beabstandete Stelle übersandt, die sich insbesondere auf dem Hof der landwirtschaftlichen Maschine oder des Besitzers des Feldes befinden kann, sodass der Landwirt, Betriebsleiter oder Lohnunternehmer die Situation zeitnah analysieren und, wenn nötig, Entscheidungen über das weitere Vorgehen treffen kann. Demnach wird durch die vorliegende Erfindung die Nachverfolgung von Situationen bei der Feldarbeit vereinfacht, ohne unnötig enorme Datenmengen anzusammeln.

Diese vorbestimmte Bedingung kann beispielsweise eintreten, wenn die Signale des Betriebsparametersensors und/oder Erntegutsensors um mehr als einen Schwellenwert von einem Sollwert abweichen, der insbesondere statisch und fest vorgegeben sein oder aus einer Karte entnommen werden kann, in dem vergleichbare Daten vorhergehender Arbeitsvorgänge abgespeichert sind. Eine andere mögliche Bedingung kann sein, dass eine Abweichung der empfangenen Signale des Betriebsparametersensors und/oder Erntegutsensors von einem bisher bei der Arbeit auf dem betreffenden Feld erfassten Maximal- oder Minimalwert um mehr als einen Schwellenwert eintritt. Dadurch können die Extrema des Feldes erfasst werden, wobei die zuvor abgespeicherten Bildsignale für die nun nicht mehr als extrem zu betrachtende, zuvor dokumentierte Situation gelöscht werden oder weiterhin abgespeichert bleiben können. Es wäre auch möglich, ein Auslösesignal abzugeben, wenn die empfangenen Signale des Betriebsparametersensors und/oder Erntegutsensors in eine vorbestimmte Klasse fallen. Dadurch können für die einzelnen Klassen, die beispielsweise niedrigen, mittleren und hohen Erträgen oder unterschiedlichen Bodenklassen oder unterschiedlichen topographischen Gegebenheiten des Felds entsprechen können, repräsentative Bildsignale abgespeichert werden.

Die Bildaufnahmeeinrichtung kann eine insbesondere im sichtbaren und/oder im infraroten und/oder ultravioletten Wellenlängenbereich sensitive Kamera zur Aufnahme stehender und/oder beweglicher Bilder und/oder eine abtastende Laserentfernungsmesseinrichtung und/oder einen abtastenden Radarsensor umfassen. Somit können stehende oder bewegliche Bilder von einem Bereich vor und/oder hinter der Maschine und/oder vom Erntegutfluss in der Maschine erzeugt werden. Die Bildaufnahmeeinrichtung wird zweckmäßigerweise auf den Bereich der Maschine gerichtet, der für die Analyse der Situation die jeweils sinnvollste Information liefern kann. Bei der Bodenbearbeitung wird sie demnach auf die Bodenbearbeitungswerkzeuge der landwirtschaftlichen Maschine ausgerichtet sein, während sie bei einer Erntemaschine auf den stehenden Bestand vor der Erntemaschine oder den Gutfluss innerhalb der Erntemaschine ausgerichtet ist.

Die Rechnereinheit kann in Reaktion auf ein Auslösesignal zusätzliche Signale abspeichern und/oder an die beabstandete Stelle übersenden, welche beispielsweise die empfangenen Signale des Betriebsparametersensors und/oder Erntegutsensors und/oder Wetterbedingungen und/oder eine Information über den jeweiligen Bediener der Maschine und/oder den Zeitpunkt des Auslösesignals enthalten. Diese zusätzlichen Signale können die Analyse der Situation erleichtern.

Der Erntegutsensor erfasst beispielsweise den Durchsatz und/oder einen Inhaltsstoffgehalt und/oder die Farbe des Ernteguts. Der Betriebsparametersensor erfasst beispielsweise die Antriebsleistung und/oder -kraft eines angetriebenen oder über das Feld bewegten Elements (z. B. Bodenbearbeitungswerkzeugs) der Maschine.

Vorzugsweise erzeugt die Rechnereinheit unterschiedliche Auslösesignale für unterschiedliche Bedingungen der empfangenen Signale des Betriebsparametersensors und/oder Erntegutsensors und speichert abhängig vom jeweiligen Auslösesignal unterschiedliche Bildsignale und ggf. zusätzliche Signale ab bzw. übersendet diese an die beabstandete Stelle. Demnach können unterschiedliche Arten von Situationen erfasst und klassifiziert werden und abhängig von der Art der Situation unterschiedliche Daten zur weiteren Verarbeitung bereitgestellt werden. So kann beispielsweise bei geringem Erntegutdurchsatz ein Bild des Felds vor einer Erntemaschine ggf. gemeinsam mit Signalen einer Messeinrichtung zur Erfassung von Inhaltsstoffen des Ernteguts abgespeichert oder abgesandt werden, um die agronomischen Bedingungen der betreffenden Stelle des Felds analysieren zu können, während bei hohen Dresch- oder Reinigungsverlusten in einem Mähdrescher weitere Daten hinsichtlich des Durchsatzes und der Dreschtrommel- und Reinigungseinstellungen abgespeichert und/oder abgesandt werden, um die Einstellung des Mähdreschers analysieren zu können.

Die Rechnereinrichtung ist vorzugsweise mit einer Eingabeeinrichtung verbunden, mit der die zur Erzeugung eines Auslösesignals führenden Bedingungen der Signale des Betriebsparametersensors und/oder Erntegutsensors eingeb- und/oder veränderbar sind und/oder die bei Erzeugung eines Auslösesignals gespeicherten und/oder abgesandten Bildsignale und ggf. zusätzlichen Signale eingeb- und/oder veränderbar sind. Der Bediener oder eine andere befugte Person kann somit, vorzugsweise nach Eingabe eines Passworts oder eines anderen Erkennungsmerkmals (z.B. Fingerabdruck, Gesichts- oder Augenabtastung, Identifikationschip) definieren, bei welchen Bedingungen ein Auslösesignal abgegeben wird. Außerdem kann definiert werden, welche Bildsignale und ggf. zusätzlichen Signale bei einem Auslösesignal abgespeichert bzw. abgesandt werden. Hier kann, wie im vorhergehenden Absatz erwähnt, zwischen unterschiedlichen Auslösesignalen für unterschiedliche Situationen unterschieden werden. Die Bedingungen und die abgespeicherten bzw. abgesandten Signale können in einer anderen Ausführungsform aber auch statisch und fest vorgegeben sein.

Die Rechnereinrichtung kann die Bildsignale in einer Ertragskarte vermerken. Bei der Auswertung eines Erntevorgangs sind demnach an den Stellen der Ertragskarte, an denen durch Bilder dokumentierte Situationen aufgetreten sind, entsprechende Markierungen enthalten. Durch Anklicken der Markierungen kann der auswertende Fachmann die abgespeicherten Bildsignale und ggf. anderen Daten zur Anzeige bringen. Die Analyse der angezeigten Bildsignale und Daten kann allein durch den Fachmann erfolgen oder er wird dabei durch eine Software unterstützt, die in einer fortgeschrittenen Version selbsttätig anhand der Bildsignale und Daten Handlungsvorschläge zur Bewältigung der Situation erzeugt.

Es bietet sich weiterhin an, die Bildsignale fortlaufend in einem temporären Speicher abzulegen und nur bei Erzeugung eines Auslösesignals die sich über einen vordefinierten Zeitraum vor und nach dem Auslösesignal erstreckenden Bildsignale in einen permanenten Speicher zu übertragen. Dadurch wird es ermöglicht, auch die Bildsignale auszuwerten, die kurz vor der Abgabe des Auslösesignals gewonnen wurden, denn diese geben in vielen Fällen gute Rückschlussmöglichkeiten über die Ursache der Situation.

Die erfindungsgemäße Anordnung kann insbesondere an selbstfahrenden oder von einem Fahrzeug gezogenen oder daran angebauten Erntemaschinen Verwendung finden, beispielsweise Mähdreschern, Ballenpressen oder Feldhäckslern, aber auch an beliebigen anderen selbstfahrenden oder von einem Fahrzeug gezogenen oder daran angebauten landwirtschaftlichen Maschinen insbesondere zur Bodenbearbeitung oder zum Düngen, Säen und zur Ausbringung von Chemikalien.

### Ausführungsbeispiel

In den Zeichnungen ist ein nachfolgend näher beschriebenes Ausführungsbeispiel der Erfindung dargestellt. Es zeigt:
- Fig. 1: eine Seitenansicht einer Erntemaschine mit einer erfindungsgemäßen Anordnung zur automatischen Dokumentation von Situationen bei der Feldarbeit, und
- Fig. 2: ein schematisches Diagramm für die Vorgehensweise, nach dem die Anordnung arbeitet.

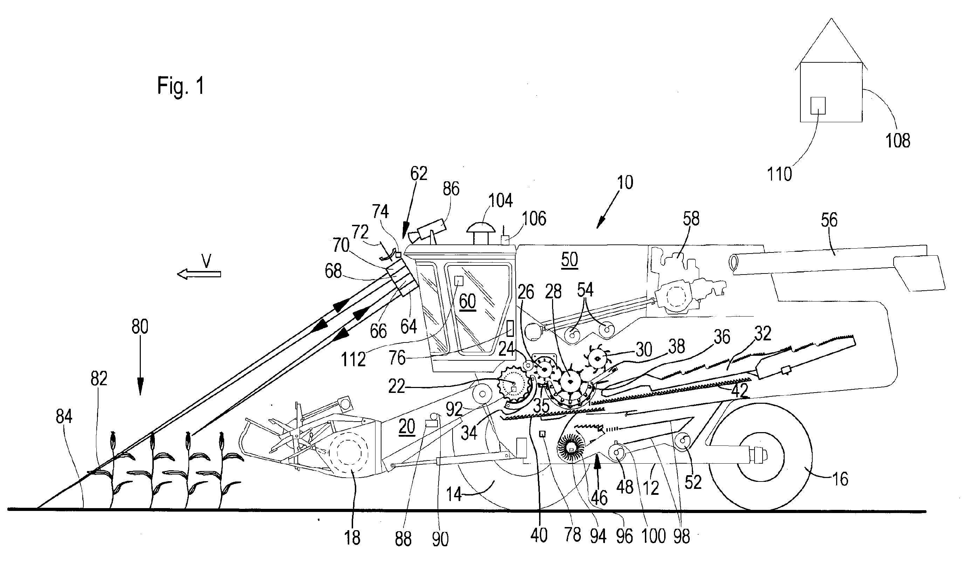

Die Figur 1 zeigt eine landwirtschaftliche Maschine 10 in Form eines selbstfahrenden Mähdreschers mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um die landwirtschaftliche Maschine 10 z. B. über ein abzuerntendes Feld zu bewegen. Im Folgenden beziehen sich Richtungsangaben, wie vorn und hinten, auf die Fahrtrichtung V der landwirtschaftlichen Maschine 10 im Erntebetrieb.

An den vorderen Endbereich der landwirtschaftlichen Maschine 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46 mit einem Gebläse 96 und Sieben 98. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite des oberen Siebes 98 durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren oder eine im Axialfluss arbeitende Dresch- und Trenneinrichtung ersetzt werden.

An der Vorderseite der Fahrerkabine 60 ist in der Nähe des Daches eine Sensoranordnung 62 angeordnet, die mit einer Rechnereinrichtung 76 verbunden ist. Die Messeinrichtung 62 könnte auch an der Erntegutbergungseinrichtung 18 angebracht werden. Die Rechnereinrichtung 76 ist mit einer Geschwindigkeitsvorgabeeinrichtung 78 (beispielsweise eine Verstelleinrichtung für eine Taumelscheibe einer Hydraulikpumpe, die hydraulikflüssigkeitsleitend mit einem Hydraulikmotor verbunden ist, der die Räder 14 antreibt) verbunden, die zur Einstellung der Vortriebsgeschwindigkeit der landwirtschaftlichen Maschine 10 eingerichtet ist.

Die Messeinrichtung 62 umfasst einen ersten Sender 64, einen ersten Empfänger 66, einen zweiten Sender 68 und einen zweiten Empfänger 70, die gemeinsam durch einen Schwenkantrieb 74 um eine etwa vertikale, leicht nach vorn geneigte Achse 72 drehbar sind. Im Betrieb überstreichen von den Sendern 64, 68 ausgesendete elektromagnetische Wellen einen vor der Messbereich vor dem Mähdrescher 10, indem die Sender 64, 68 und Empfänger 66, 70 (oder lediglich ihre Wellen abstrahlenden und/oder empfangenden Elemente) um die Achse 72 verschwenkt werden. Dadurch wird das Feld 80 mit den darauf stehenden Pflanzen 82 entlang einer Messrichtung, die sich in einem kreissegmentförmigen Bogen vor dem Mähdrescher 10 erstreckt, sukzessive überstrichen.

Der erste Sender 64 strahlt elektromagnetische erste Wellen in Form von Licht im (nah-) infraroten oder sichtbaren Wellenbereich aus, während der erste Empfänger 66 nur für dieses Licht sensitiv ist. Aufgrund der gewählten Wellenlänge wird das Licht von den Pflanzen 82 reflektiert, wenn es auf sie trifft. Wenn das Licht hingegen zwischen Pflanzen hindurch (z. b. in dünnen oder fehlenden Beständen) auf den Erdboden 84 trifft, wird es auch vom Erdboden reflektiert. Der erste Sender 64 umfasst vorzugsweise einen Laser zur Erzeugung des Lichts.

Der zweite Sender 68 strahlt elektromagnetische zweite Wellen im Mikro- oder Radarwellenbereich ab, während der zweite Empfänger 70 nur für diese Wellen empfindlich ist. Die Wellenlänge ist derart gewählt, dass der größte Teil der zweiten Wellen die Pflanzen durchdringt und nur vom Erdboden 84 reflektiert wird. Ein gewisser, wenn auch kleinerer Anteil der zweiten Wellen wird auch von den Pflanzen 82 reflektiert.

Die von den Sendern 64, 68 abgestrahlten elektromagnetischen Wellen erreichen den Erdboden 84 im Abstand von einigen Metern (beispielsweise 10 m) in der Fahrtrichtung des Mähdreschers 10 vor der Erntegutbergungsvorrichtung 18. Die von den Sendern 64, 68 abgestrahlten Wellen können amplituden- oder anderweitig moduliert sein, um das Signal/Rausch-Verhältnis zu verbessern. Über eine Laufzeitmessung bewerkstelligt die Rechnereinrichtung 76 eine Erfassung des Abstands und/oder einer anderen Messgröße zwischen der Messeinrichtung 62 und dem Punkt, an dem die Wellen jeweils reflektiert wurden. Der Schwenkantrieb 74 kann als Servo- oder Schrittmotor ausgeführt sein und verschwenkt die Messeinrichtung 62 (oder lediglich ihre Wellen abstrahlenden und/oder empfangenden Elemente) kontinuierlich oder schrittweise um einen Winkelbereich von beispielsweise 30° um die Achse 72 hin und her. Die Rechnereinrichtung 76 ist eingerichtet, für jeden Schwenkwinkel der Messeinrichtung 62 den jeweiligen Winkel um die Achse 72 und die Laufzeit der Welle bzw. den Abstand des Empfängers 66, 70 und Senders 64, 68 vom Reflexionspunkt zu erfassen. Anschließend wird der Schwenkantrieb 74 aktiviert und die Messeinrichtung 62 in eine andere Stellung verbracht. Der Auswertungseinrichtung 74 liegt eine Information über den jeweiligen Winkel des der Messeinrichtung 62 vor, da sie den Schwenkantrieb 74 steuert. Denkbar wäre auch ein separater Sensor zur Erfassung des Schwenkwinkels, wobei der Servo- oder Schrittmotor durch einen beliebigen Motor ersetzt werden kann. Der Winkel der Messeinrichtung 62 um die Achse 72 definiert eine Messrichtung, entlang der die Laufzeiten der Wellen der Senders 64, 68 zum zugehörigen Empfänger 66, 70 ermittelt werden. Sie erstreckt sich horizontal und kreisbogenförmig quer zur Vorwärtsrichtung der landwirtschaftlichen Maschine 10.

Die Signale des ersten Empfängers 66 enthalten eine Information über die Höhe der oberen Enden der Pflanzen 82, denn dort werden sie in erster Linie reflektiert. Einige erste Wellen dringen jedoch in dünneren Beständen weiter nach unten vor, zum Teil bis zum Erdboden 84, und werden erst dort reflektiert und vom ersten Empfänger 66 empfangen. In dünneren Beständen variieren die vom ersten Empfänger 66 erfassten Abstände demnach stärker als in dichteren Beständen. Diese unterschiedlichen, von der Bestandsdichte abhängigen Variationen der Abstände werden von der Auswertungseinrichtung 74 evaluiert und zur Bestimmung der Dichte des Pflanzenbestandes herangezogen. Weiterhin dienen die Messwerte des zweiten Empfängers 70 zur Bestimmung eines Bodenprofils, das in Verbindung mit den mit dem ersten Empfänger 66 erfassten Höhen der Oberseiten der Pflanzen 82 zu einer genaueren Bestimmung der Pflanzenhöhen verwendet wird, welche ebenfalls zur Bestimmung der Pflanzenmenge herangezogen werden.

Eine Kamera 86 blickt vom Dach der Kabine 60 aus schräg nach unten und vom auf das Feld 80 mit den darauf vor der Erntegutbergungsvorrichtung 18 stehenden Pflanzen 82. Die Signale der Kamera 86 werden ebenfalls der Rechnereinrichtung 76 zugeführt.

Weiterhin ist die landwirtschaftliche Maschine 10 mit mehreren Betriebsparametersensoren und Erntegutsensoren ausgestattet, die jeweils direkt oder indirekt Daten zum Betrieb der landwirtschaftlichen Maschine 10 bzw. der Eigenschaften der geernteten Pflanzen 82 erfassen und ihre Signale an die Rechnereinrichtung 76 übergeben. Ein Erntegutsensor 88 erfasst die Winkelstellung eines drehbar gelagerten Tasters 90, der mit der Erntegutmatte im Schrägförderer 20 zusammenwirkt. Der Erntegutsensor 88 erfasst demnach die Schichtdicke der Pflanzen 82 im Schrägförderer 20. Ein Betriebsparametersensor 92 erfasst das Antriebsmoment bzw. die Antriebsleistung der Dreschtrommel 22, das oder die wiederum von der Menge (Volumen und Masse) der aufgenommenen Pflanzen 82 abhängt. Ein Betriebsparametersensor 94 erfasst das Antriebsmoment bzw. die Antriebsleistung des Gebläses 96, das oder die von der Belegung der Siebe 98 abhängt. Ein Erntegutsensor 100 umfasst eine Kamera und ein Nahinfrarotspektrometer, die mit dem von der Körnerschnecke 48 geförderten, gereinigten Korn zusammenwirken und einerseits mittels der Kamera und einer Bildverarbeitung die Reinheit des Korns und den Bruchkornanteil im gereinigten Korn und andererseits mittels des Nahinfrarotspektrometers die Kornfeuchte und andere Inhaltsstoffe, wie den Proteingehalt ermitteln. Hierzu sei auf die Offenbarung der DE 10 2007 007 040 A1 verwiesen. Schließlich erfasst ein Erntegutsensor 102 Verlustkörner am Auslauf des oberen Siebes 98.

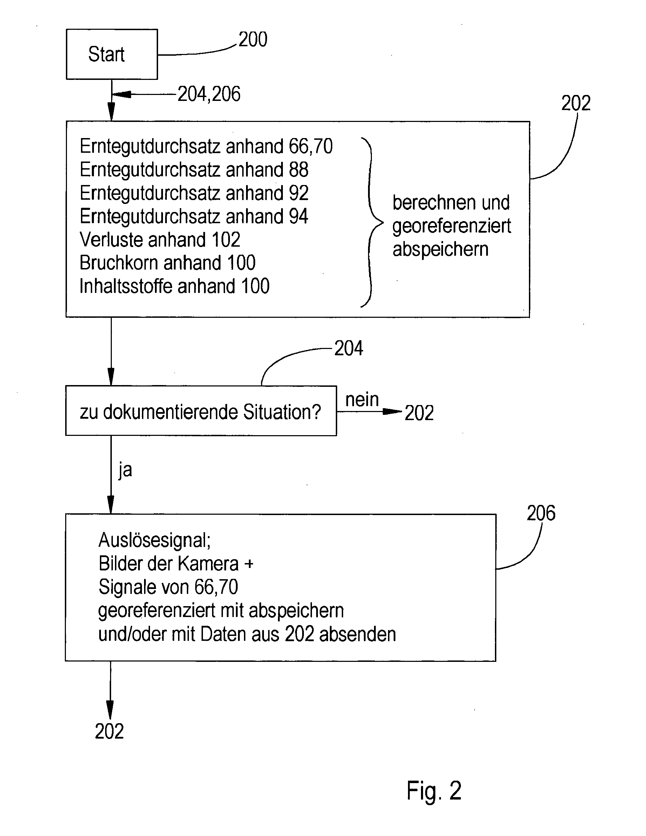

Die Figur 2 verdeutlicht die Arbeitsweise der erfindungsgemäßen Anordnung zur automatischen Dokumentation von Situationen bei der Feldarbeit. Nach dem Start im Schritt 200 wird im Schritt 202 durch die Rechnereinrichtung 76 der Erntegutdurchsatz anhand der Signale der Empfänger 66, 70 evaluiert. Details hierzu ergeben sich aus DE 10 2008 043 716 A1 und DE 10 2011 085 380 A1 und den darin zitierten Referenzen. Außerdem wird der Erntegutdurchsatz anhand der Signale des Erntegutsensors 88 und der Betriebsparametersensoren 92 und 94 ermittelt. Zudem werden die Verluste anhand des Erntegutsensors 102 und der Bruchkornanteil sowie die Inhaltsstoffe (Feuchtigkeit, Proteingehalt) des Korns anhand des Erntegutsensors 100 bestimmt. Diese Daten werden gemeinsam mit Positionsdaten eines satellitensignalbasierten Positionsbestimmungssystems 104 georeferenziert abgespeichert, um die Feldarbeit zu dokumentieren.

Im folgenden Schritt 204 wird evaluiert, ob eine fotografisch zu dokumentierende Situation vorliegt. Dazu können die Erntegutdurchsätze aus dem Schritt 202 mit einer Ertragskarte aus dem Vorjahr verglichen werden. Wenn die Abweichung zwischen dem aktuell mit den Erntegutsensoren 66, 70, 88 und den Betriebsparametersensoren 92 und 94 gemessenen Erntegutdurchsätzen und den erwarteten Erntegutdurchsätzen größer als ein Schwellenwert ist, liegt eine erste fotografisch zu dokumentierende Situation vor. Analog liegt eine zweite fotografisch zu dokumentierende Situation vor, wenn anhand des Erntegutsensors 102 erfassten Verluste größer als ein vorbestimmter Schwellenwert sind, der beispielsweise 2 % betragen kann oder aus der Ertragskarte entnommen wird. Eine (dritte) fotografisch zu dokumentierende Situation liegt weiterhin vor, wenn der Bruchkornanteil größer als ein vorbestimmter Schwellenwert ist oder der Feuchtigkeitsgehalt des Korns größer als ein vorbestimmter Schwellenwert ist oder der Proteingehalt des Korns kleiner ein vorbestimmter Schwellenwert ist. Weiterhin könnte eine fotografisch zu dokumentierende Situation vorliegen, wenn der Erntegutdurchsatz in eine vorgestimmte Klasse (klein, mittel, hoch) fällt oder den bisherigen Minimal- oder Maximalwert um einen bestimmten Schwellenwert von z.B. 10 % überschreitet. Falls keine der genannten Situationen vorliegt, folgt wieder der Schritt 202.

Anderenfalls erfolgt der Schritt 206, in dem ein Auslösesignal abgegeben wird und (sich zeitlich über ein Intervall vor dem Auslösesignal bis nach dem Auslösesignal erstreckende) Bildsignale der Kamera 86 aus einem temporären, fortlaufend beschriebenen und wieder gelöschten Speicher entnommen und gemeinsam mit den über das besagte zeitliche Intervall erstreckenden Signalen der Empfänger 66, 70 und den Daten aus Schritt 202 abgespeichert werden. Diese Daten einschließlich der Bildsignale der Kamera 86 und der Signale der Empfänger 66, 70 können somit aus der im Schritt 202 erzeugten Ertragskarte entnommen werden, um sie später auswerten zu können. Alternativ oder zusätzlich werden im Schritt 206 die erwähnten Daten und Signale über eine Sendeeinrichtung 106 an einen Auswertungscomputer 110 an einer beabstandeten Stelle 108 übersandt.

Das Auslösesignal kann intern in der Rechnereinrichtung 76 genutzt werden, oder dem Bediener in der Kabine 60 kann eine Anzeige oder ein akustischer Hinweis gegeben werden, damit er selbst auch im Rahmen seiner Fähigkeiten auf die Situation reagieren kann. Der Fachmann (Betriebsleiter, Landwirt, Lohnunternehmer o.dgl.) an der beabstandeten Stelle kann, sei es nach Eingang des Auslösesignals und der besagten Daten und Signale über die Sendeeinrichtung 106 oder nach Ende der Arbeiten auf dem Feld und einer Übertragung der Daten aus Figur 2 auf drahtlosem Wege oder mittels eines transportablen Speichermediums auf den Auswertungscomputers 110, mittels des Auswertungscomputers 110 fotografisch dokumentierte, möglicherweise eine Reaktion erfordernde Situationen analysieren. Dazu kann es ausreichen, dass er sich die Bilder der Kamera 86 auf einer Anzeige des Auswertungscomputers 110 ansieht, oder bei einer fortgeschrittenen Ausführungsform kann der Auswertungscomputer 110 ihm Handlungsvorschläge machen. Diese können über die auch als Empfänger ausgebildete Sendeeinrichtung 106 (oder über eine beliebige andere Verbindung, z.B. Mobiltelefonverbindung) an den Bediener der Maschine 10 übersandt werden.

Eine Eingabeeinrichtung 112 ermöglicht es dem Bediener oder einer anderen befugten Person insbesondere nach Eingabe eines Passworts die Kriterien für die Abgabe des Auslösesignals zu definieren oder zu ändern. Außerdem kann er mittels der Eingabeeinrichtung 112 die in den Schritten 202 und 206 abgespeicherten bzw. übertragenen Daten oder Signale (z.B. die Zeitdauer der abgespeicherten und/oder übersandten Signale der Kamera 86) definieren oder ändern.

Es sei noch angemerkt, dass auch die Signale der Kamera 86 fortlaufend durch die Rechnereinrichtung 76 überwacht werden könnten. Dadurch könnten beispielsweise Hindernisse vor der Maschine 10 erkannt und zur Erzeugung eines Auslösesignals (und zur Erzeugung eines Stoppsignals für den Bediener oder die Geschwindigkeitsvorgabeeinrichtung 78) verwendet werden. Auch könnte eine Information über die Farbe des Ernteguts aus den Signalen der Kamera 86 extrahiert und als Erntegutparameter in den Schritten 202, 204 und 206 der Figur 2 behandelt werden, sodass z.B. ein Auslösesignal bei zu grünem oder liegendem Erntegut erzeugt werden kann.

## Patentansprüche

1. Anordnung zur automatischen Dokumentation von Situationen bei der Feldarbeit, umfassend:
wenigstens einen Betriebsparametersensor (92, 94) zur Erfassung eines Betriebsparameters einer landwirtschaftlichen Maschine (10) bei der Feldarbeit und/oder wenigstens einen Erntegutsensor (66, 70, 88, 100, 102) zur Erfassung einer Eigenschaft von der landwirtschaftlichen Maschine (10) bei der Feldarbeit aufgenommenen und/oder bearbeiteten Ernteguts, und
eine mit dem Betriebsparametersensor (92, 94) und/oder dem Erntegutsensor (66, 70, 88, 100, 102) verbundene Rechnereinheit (76), die programmiert ist, bei Eintritt einer vorbestimmten Bedingung der empfangenen Signale des Betriebsparametersensors (92, 94) und/oder Erntegutsensors (66, 70, 88, 100, 102) ein Auslösesignal zu erzeugen,
**dadurch gekennzeichnet, dass** die Rechnereinheit (76) mit einer Bildaufnahmeeinrichtung (66, 70, 86) zur Erzeugung eines Bildsignals von der landwirtschaftlichen Maschine (10) und/oder ihrer Umgebung verbunden und programmiert ist, Bildsignale in Reaktion auf ein Auslösesignal georeferenziert abzuspeichern und/oder über eine Übertragungsstrecke an eine beabstandete Stelle (108) zu übersenden.

2. Anordnung nach Anspruch 1, **dadurch gekennzeichnet, dass** die Rechnereinheit (76) programmiert ist, ein Auslösesignal zu erzeugen, wenn:
eine Abweichung der empfangenen Signale des Betriebsparametersensors (92, 94) und/oder Erntegutsensors (66, 70, 88, 100, 102) von einem erwarteten Sollwert um mehr als einen Schwellenwert eintritt und/oder
eine Abweichung der empfangenen Signale des Betriebsparametersensors (92, 94) und/oder Erntegutsensors (66, 70, 88, 100, 102) von einem bisher eingetretenen Maximal- oder Minimalwert um mehr als einen Schwellenwert eintritt und/oder
die empfangenen Signale des Betriebsparametersensors (92, 94) und/oder Erntegutsensors (66, 70, 88, 100, 102) in eine vorbestimmte Klasse fallen.

3. Anordnung nach Anspruch 1 oder 2, **dadurch gekennzeichnet, dass** die Bildaufnahmeeinrichtung (66, 70, 86) eine Kamera (86) zur Aufnahme stehender und/oder beweglicher Bilder und/oder eine abtastende Laserentfernungsmesseinrichtung (64, 66) und/oder einen abtastenden Radarsensor (68, 70) umfasst.

4. Anordnung nach einem der Ansprüche 1 bis 3, **dadurch gekennzeichnet, dass** die Bildaufnahmeeinrichtung (66, 70, 86) im sichtbaren und/oder im infraroten und/oder ultravioletten Wellenlängenbereich sensitiv ist.

5. Anordnung nach einem der Ansprüche 1 bis 4, **dadurch gekennzeichnet, dass** die Bildaufnahmeeinrichtung (66, 70, 86) auf den Erntegutfluss in der Maschine (10) und/oder auf einen Bereich vor und/oder hinter der Maschine (10) gerichtet ist.

6. Anordnung nach einem der Ansprüche 1 bis 5, **dadurch gekennzeichnet, dass** die Rechnereinheit (76) programmiert ist, in Reaktion auf ein Auslösesignal zusätzliche Signale abzuspeichern und/oder abzusenden, welche die empfangenen Signale des Betriebsparametersensors (92, 94) und/oder Erntegutsensors (66, 70, 94, 100, 102) und/oder Wetterbedingungen und/oder eine Information über den jeweiligen Bediener der Maschine (10) und/oder den Zeitpunkt des Auslösesignals enthalten.

7. Anordnung nach einem der Ansprüche 1 bis 6, **dadurch gekennzeichnet, dass** der Erntegutsensor (66, 70, 94, 100, 102) eingerichtet ist, den Durchsatz und/oder einen Inhaltsstoffgehalt und/oder die Farbe des Ernteguts zu erfassen.

8. Anordnung nach einem der Ansprüche 1 bis 7, **dadurch gekennzeichnet, dass** der Betriebsparametersensor (92, 94) eingerichtet ist, die Antriebsleistung und/oder-kraft eines angetriebenen oder über das Feld bewegten Elements der Maschine (10) zu erfassen.

9. Anordnung nach einem der Ansprüche 1 bis 8, **dadurch gekennzeichnet, dass** die Rechnereinheit (76) programmiert ist, unterschiedliche Auslösesignale für unterschiedliche Bedingungen der empfangenen Signale des Betriebsparametersensors (92, 94) und/oder Erntegutsensors (66, 70, 94, 100, 102) zu erzeugen und abhängig vom jeweiligen Auslösesignal unterschiedliche Bildsignale und ggf. zusätzliche Signale abzuspeichern und/oder an die beabstandete Stelle (108) zu übersenden.

10. Anordnung nach einem der Ansprüche 1 bis 9, **dadurch gekennzeichnet, dass** die Rechnereinrichtung (76) mit einer Eingabeeinrichtung (112) verbunden ist, mit der die zur Erzeugung eines Auslösesignals führenden Bedingungen der Signale des Betriebsparametersensors (92, 94) und/oder Erntegutsensors (66, 70, 88, 100, 102) eingeb- und/oder veränderbar sind und/oder die bei Erzeugung eines Auslösesignals gespeicherten und/oder abgesandten Bildsignale und ggf. zusätzlichen Signale eingeb- und/oder veränderbar sind.

11. Anordnung nach einem der Ansprüche 1 bis 10, **dadurch gekennzeichnet, dass** die Rechnereinrichtung (76) betreibbar ist, die Bildsignale in einer Ertragskarte zu vermerken.

12. Anordnung nach einem der Ansprüche 1 bis 12, **gekennzeichnet durch** eine Auswertungseinrichtung (110) zur selbsttätigen Auswertung der gespeicherten Bildsignale.

13. Anordnung nach einem der Ansprüche 1 bis 12, **dadurch gekennzeichnet, dass** die Rechnereinrichtung (76) betreibbar ist, die Bildsignale fortlaufend in einem temporären Speicher abzulegen und nur bei Erzeugung eines Auslösesignals die sich über einen vordefinierten Zeitraum vor und nach dem Auslösesignal erstreckenden Bildsignale in einen permanenten Speicher zu übertragen.

14. Landwirtschaftliche Maschine (10) mit einer Anordnung nach einem der Ansprüche 1 bis 13.

15. Verfahren zur automatischen Dokumentation von Situationen bei der Feldarbeit, umfassend:
Erfassen eines Betriebsparameters einer landwirtschaftlichen Maschine (10) bei der Feldarbeit und/oder einer Eigenschaft von der landwirtschaftlichen Maschine (10) bei der Feldarbeit aufgenommenen und/oder bearbeiteten Ernteguts, und
Erzeugen eines Auslösesignals bei Eintritt einer vorbestimmten Bedingung des Betriebsparameters und/oder der Eigenschaft des Ernteguts,
**dadurch gekennzeichnet, dass** in Reaktion auf ein Auslösesignal Bildsignale von der landwirtschaftlichen Maschine (10) und/oder ihrer Umgebung georeferenziert abgespeichert und/oder über eine Übertragungsstrecke an eine beabstandete Stelle (108) übersandt werden.

## Claims

1. Arrangement for automatically documenting situations during fieldwork, comprising:
at least one operating parameter sensor (92, 94) for detecting an operating parameter of an agricultural machine (10) during the fieldwork and/or at least one harvested crop sensor (66, 70, 88, 100, 102) for detecting a property of harvested crop which is taken up and/or processed by the agricultural machine (10) during fieldwork, and
a computer unit (76) which is connected to the operating parameter sensor (92, 94) and/or the harvested crop sensor (66, 70, 88, 100, 102) and which is programmed to generate a triggering signal when a predetermined condition of the received signals of the operating parameter sensor (92, 94) and/or harvested crop sensor (66, 70, 88, 100, 102) is satisfied,
**characterized in that** the computer unit (76) is connected to an image-recording device (66, 70, 86) for generating an image signal of the agricultural machine (10) and/or the surroundings thereof and is programmed to store image signals in a geo-referenced fashion in reaction to a triggering signal and/or to transmit image signals to a remote location (108) via a transmission link.

2. Arrangement according to Claim 1, **characterized in that** the computer unit (76) is programmed to generate a triggering signal if:
a deviation of the received signals of the operating parameter sensor (92, 94) and/or harvested crop sensor (66, 70, 88, 110, 102) from an anticipated setpoint value by more than a threshold value occurs, and/or
a deviation of the received signals of the operating parameter sensor (92, 94) and/or harvested crop sensor (66, 70, 88, 100, 102) from a previously occurring maximum or minimum value by more than a threshold value occurs,
and/or
the received signals of the operating parameter sensor (92, 94) and/or harvested crop sensor (66, 70, 88, 100, 102) are attributable to a predetermined class.

3. Arrangement according to Claim 1 or 2, **characterized in that** the image-recording device (66, 70, 86) comprises a camera (86) for recording static and/or moving images and/or a scanning laser-distance-measuring device (64, 66) and/or a scanning radar sensor (68, 70).

4. Arrangement according to one of Claims 1 to 3, **characterized in that** the image-recording device (66, 70, 86) is sensitive in the visible and/or in the infrared and/or ultraviolet wavelength range.

5. Arrangement according to one of Claims 1 to 4, **characterized in that** the image-recording device (66, 70, 86) is directed at the flow of harvested crop in the machine (10) and/or at a region in front of and/or behind the machine (10).

6. Arrangement according to one of Claims 1 to 5, **characterized in that** the computer unit (76) is programmed to store and/or emit additional signals in reaction to a triggering signal, which additional signals contain the received signals of the operating parameter sensor (92, 94) and/or harvested crop sensor (66, 70, 94, 100, 102) and/or weather conditions and/or information about the respective operator of the machine (10) and/or the time of the triggering signal.

7. Arrangement according to one of Claims 1 to 6, **characterized in that** the harvest crop sensor (66, 70, 94, 100, 102) is configured to detect the throughput rate and/or a material content and/or the colour of the harvested crop.

8. Arrangement according to one of Claims 1 to 7, **characterized in that** the operating parameter sensor (92, 94) is configured to detect the drive power and/or drive force of an element of the machine (10) which is driven or moved over the field.

9. Arrangement according to one of Claims 1 to 8, **characterized in that** the computer unit (76) is programmed to generate different triggering signals for different conditions of the received signal of the operating parameter sensor (92, 94) and/or harvested crop sensor (66, 70, 94, 100, 102) and to store different image signals and, if appropriate, additional signals as a function of the respective triggering signal and/or to transmit said signals to the remote location (108).

10. Arrangement according to one of Claims 1 to 9, **characterized in that** the computer unit (76) is connected to an input device (112) with which the conditions of the signals of the operating parameter sensor (92, 94) and/or harvested crop sensor (66, 70, 88, 100, 102) which give rise to the generation of a triggering signal can be input and/or changed and/or the image signals which are stored and/or emitted during the generation of a triggering signal and, if appropriate, additional signals can be input and/or changed.

11. Arrangement according to one of Claims 1 to 10, **characterized in that** the computer device (76) can be operated to register the image signals in a yield map.

12. Arrangement according to one of Claims 1 to 12, **characterized by** an evaluation device (110) for automatically evaluating the stored image signals.

13. Arrangement according to one of Claims 1 to 12, **characterized in that** the computer device (76) can be operated to store the image signals continuously in a temporary memory and to transmit the image signals into a permanent memory only when a triggering signal is generated, said image signals extending over a predefined time period before and after the triggering signal.

14. Agricultural machine (10) having an arrangement according to one of Claims 1 to 13.

15. Method for automatically documenting situations during fieldwork,
comprising:
detecting an operating parameter of an agricultural machine (10) during the fieldwork and/or a property of harvested crop which is taken up and/or processed by the agricultural machine (10) during the fieldwork, and
generating a triggering signal when a predetermined condition of the operating parameter and/or of the property of the harvested crop is satisfied,
**characterized in that**, in reaction to a triggering signal, image signal of the agricultural machine (10) and/or the surroundings thereof are stored in a geo-referenced fashion and/or transmitted via a transmission link to a remote location (108).

## Revendications

1. Ensemble de documentation automatique de situations de travail sur les champs, l'ensemble comprenant :
au moins un capteur (92, 94) de paramètre de fonctionnement qui saisit un paramètre de fonctionnement d'une machine agricole (10) lors du travail sur les champs et/ou au moins un capteur (66, 70, 88, 100, 102) de récolte qui saisit une propriété de la machine agricole (10) à propos de la récolte reprise et/ou traitée et
une unité de calculateur (76) raccordée au capteur (92, 94) de paramètre de fonctionnement et/ou au capteur (66, 70, 88, 100, 102) de récolte et programmée pour former un signal de déclenchement lors de l'introduction d'une condition prédéterminée des signaux reçus du capteur (92, 94) de paramètre de fonctionnement et/ou du capteur (66, 70, 88, 100, 102) de récolte,
**caractérisé en ce que**
l'unité de calculateur (76) est raccordée à un dispositif (66, 70, 86) d'enregistrement d'images qui forme un signal d'image de la machine agricole (10) et/ou de son environnement et est programmée pour conserver en mémoire avec une référence géographique les signaux d'image en réaction à un signal de déclenchement et/ou les envoyer à un emplacement distant (108) par l'intermédiaire d'un parcours de transmission.

2. Ensemble selon la revendication 1, **caractérisé en ce que** l'unité de calculateur (76) est programmée pour former un signal de déclenchement si :
un écart supérieur à une valeur de seuil s'établit entre les signaux reçus du capteur (92, 94) de paramètre de fonctionnement et/ou du capteur de récolte (66, 70, 88, 100, 102) et une valeur de consigne attendue et/ou
un écart supérieur à une valeur de seuil s'établit entre les signaux reçus du capteur (92, 94) de paramètre de fonctionnement et/ou du capteur (66, 70, 88, 100, 102) de récolte et une valeur maximale ou une valeur minimale déjà introduites et/ou
si les signaux du capteur (92, 94) de paramètre de fonctionnement et/ou du capteur (66, 70, 88, 100, 102) de récolte tombent dans une classe prédéterminée.

3. Ensemble selon les revendications 1 ou 2, **caractérisé en ce que** le dispositif (66, 70, 86) d'enregistrement d'images comporte une caméra (86) qui enregistre des images fixes et/ou des images mobiles et/ou un dispositif palpeur (64, 66) de mesure de distance par laser et/ou un capteur palpeur (68, 70) par radar.

4. Ensemble selon l'une des revendications 1 à 3, **caractérisé en ce que** le dispositif (66, 70, 86) d'enregistrement d'images est sensible dans la plage des longueurs d'onde visibles, de l'infrarouge et/ou de l'ultraviolet.

5. Ensemble selon l'une des revendications 1 à 4, **caractérisé en ce que** le dispositif (66, 70, 86) d'enregistrement d'images est orienté sur l'écoulement de récolte dans la machine (10) et/ou sur une zone située en avant et/ou en arrière de la machine (10).

6. Ensemble selon l'une des revendications 1 à 5, **caractérisé en ce que** l'unité de calculateur (76) est configurée pour, en réaction à un signal de déclenchement, conserver en mémoire et/ou envoyer des signaux supplémentaires qui contiennent les signaux du capteur (92, 94) de paramètres de fonctionnement et/ou du capteur (66, 70, 94, 100, 102) de récolte, des conditions météorologiques, une information concernant l'opérateur actuel de la machine (10) et/ou l'instant du signal de déclenchement.

7. Ensemble selon l'une des revendications 1 à 6, **caractérisé en ce que** le capteur (66, 70, 94, 100, 102) de récolte est conçu pour saisir le débit, le contenu et/ou la couleur de la récolte.

8. Ensemble selon l'une des revendications 1 à 7, **caractérisé en ce que** le capteur (92, 94) de paramètre de fonctionnement est conçu pour saisir la puissance et/ou la force d'entraînement d'un élément de la machine (10) entraîné ou déplacé sur le champ.

9. Ensemble selon l'une des revendications 1 à 8, **caractérisé en ce que** l'unité de calculateur (76) est programmée pour former différents signaux de déclenchement dans différentes conditions des signaux reçus du capteur (92, 94) de paramètre de fonctionnement et/ou du capteur de récolte (66, 70, 94, 100, 102) et pour conserver en mémoire en fonction du signal de déclenchement particulier différents signaux d'image et éventuellement des signaux supplémentaires et/ou pour les envoyer à l'emplacement distant (108).

10. Ensemble selon l'une des revendications 1 à 9, **caractérisé en ce que** l'unité de calculateur (76) est raccordée à un dispositif d'introduction (112) par lequel les conditions des signaux du capteur (92, 94) de paramètre de fonctionnement et/ou du capteur de récolte (66, 70, 88, 100, 102) conduisant à un signal de déclenchement peuvent être introduites et/ou modifiées et/ou par lequel les signaux d'images conservés en mémoire et/ou émis lors de la formation d'un signal de déclenchement peuvent être introduits et/ou modifiés.

11. Ensemble selon l'une des revendications 1 à 10, **caractérisé en ce que** le dispositif de calculateur (76) peut être utilisé pour reporter les signaux d'images sur une carte de rendement.

12. Ensemble selon l'une des revendications 1 à 12, **caractérisé par** un dispositif d'évaluation (110) qui évalue automatiquement les signaux d'image conservés en mémoire.

13. Ensemble selon l'une des revendications 1 à 12, **caractérisé en ce que** le dispositif de calculateur (76) peut être utilisé pour placer les signaux d'images en permanence dans une mémoire temporaire et transférer dans une mémoire permanente les signaux d'images qui s'étendent sur une durée prédéfinie qui précède et qui suit le signal de déclenchement uniquement lors de la formation d'un signal de déclenchement.

14. Machine agricole (10) dotée d'un ensemble selon l'une des revendications 1 à 13.

15. Procédé de documentation automatique de situations de travail dans les champs, le procédé comportant les étapes qui consistent à :
saisir un paramètre de fonctionnement d'une machine agricole (10) lors du travail sur le champ et/ou une propriété de la machine agricole (10) à propos de la récolte reprise et/ou traitée lors du travail sur les champs et
former un signal de déclenchement lorsqu'une condition prédéterminée du paramètre de fonctionnement et/ou de la propriété de la récolte intervient, **caractérisé en ce que**
en réaction à un signal de déclenchement, des signaux d'images de la machine agricole (10) et/ou de son environnement sont conservés en mémoire avec une référence géographique et/ou sont envoyés à un emplacement distant (108) par l'intermédiaire d'un parcours de transfert.
